# EUROPEAN PATENT APPLICATION

(11) **EP 3 136 361 A1**
(43) Date of publication of application: **01.03.2017**
(21) Application number: 15889424.6
(22) Date of filing: 27.10.2015
(51) Int. Cl.: G08B 13/196

(54) **IMAGE MONITORING DEVICE AND METHOD THEREFOR**

(30) Priority: 01.07.2015 KR 20150094163
(71) Applicant: Rexgen, Jeollabuk-do 54853 (KR)
(72) Inventor: AHN, Soon Hyun, Anyang-si Gyeonggi-do 14057 (KR); OH, Jeong Uk, Anyang-si Gyeonggi-do 14057 (KR)
(74) Representative: Roos, Peter
(86) International application number: PCT/KR2015/011379
(87) International publication number: WO 2017/003036

(57) **Abstract**

Provided are a image surveillance device and a method thereof. The image surveillance device for acquiring images of a surveillance area may include: a setting unit that sets preset information including at least one of pan, tilt, and zoom information for a camera so that the camera can acquire images of a place corresponding to a trade name; and a control unit that controls the camera to acquire images of the place corresponding to the trade name on the basis of the preset information when a request for images corresponding to the trade name is inputted.

According to the present invention, the manager may be more quickly and easily check the images for the periphery of the place where the trade name exists by controlling the camera on the basis of the preset information matched with the trade name.

## Description

### [Technical Field]

The present invention relates to a image surveillance device and a method thereof. More particularly, the present invention relates to a image surveillance device which automatically acquires images of a periphery of a place where a trade name exists, and supplies acquired images to a manager for an easy and quick check for the images, and a method thereof.

### [Background Art]

In general, a image surveillance system using CCTV cameras is used for crime prevention, surveillance, crime solving, and so on in areas that may need monitoring such as buildings, roads, narrow and dark alleys, parks, interior spaces, and so on.

In the image surveillance system, images acquired by the CCTV cameras are transmitted to an operating server in real time, and the transmitted images are checked by the operating server in real time. The operating server adjusts pan/tilt/zoom (PTZ) of the CCTV cameras to be suit for conditions for image surveillance.

In a conventional image surveillance method, in the case when an urgent help is needed due to an incident or criminal accident, the camera that is located at an address an accident informer provides is first searched and then a check for images obtained from the camera is performed. However, such a method has a drawback that the images for the spot where the accident took place can't be quickly searched if the accident informer doesn't know the detailed address of the accident spot.

Moreover, if receiving the address information from the accident informer, a system manager should manually detect the accident spot, adjusting the angle of the camera until the spot where the accident took place or the accident informer is shown on a screen. This method may be vulnerable to a rapid action for the accident since the check process for the accident spot is too cumbersome.

For example, when the police intend to perform a crackdown on a place (for example, an internet cafe, an illegal entertainment establishment), some people who got a hint of the crackdown may run away before the crackdown. To prevent such an escape, in the conventional method, the server manager should check the images of cameras installed at the corresponding place, and manually adjust the angles of the cameras, one by one, before the police start the crackdown. However, these processes are also too cumbersome and inefficient.

The background art of the present invention is disclosed in the Korean Patent Publication No. 2009-0096140 on September 10, 2009.

### [DETAILED DESCRIPTION OF THE INVENTION]

### [Technical Problem]

The present invention provides a image surveillance device which automatically acquires images of a periphery of a place where a trade name exists, and supplies acquired images to a manager for an easy and quick check for the images, and a method thereof.

### [Technical Solution]

An exemplary embodiment of the present invention provides a image surveillance device for acquiring images of a surveillance area, which may include: a setting unit that sets preset information including at least one of pan, tilt, and zoom information for a camera so that the camera can acquire images of a place corresponding to a trade name; and a control unit that controls the camera to acquiring images of the place corresponding to the trade name on the basis of the preset information when a request for images corresponding to the trade name is inputted.

This image surveillance device may further include a selection unit that selects the camera on the basis of at least one of the trade name and a location when a request for images corresponding to the trade name and the location is inputted, and the control unit may control the selected camera to acquire images of the place corresponding to the trade name.

The image surveillance device may further include an image processing unit that processes the images transmitted from the camera, and recognizes the trade name in the images.

The setting unit may set the preset information of the camera on the basis of information inputted from a manager, or on the basis of the trade name recognized by the image processing unit, and at least one of pan, tilt, and zoom information to be used for acquiring images of the trade name.

The camera may acquire the images while rotating on the basis of the preset information.

The setting unit may set the preset information for the camera so that the camera can acquire images of the place, and may store at least one of the trade name, the preset information, and a location of the camera.

The image surveillance device may further include a storage unit, which stores the images acquired by the camera to correspond to at least one of an ID of the camera, a location of the camera, the trade name, and the preset information.

Another exemplary embodiment of the present invention provides a image surveillance method for acquiring images of a surveillance area using a image surveillance device, which may include: setting preset information including at least one of pan, tilt, and zoom information for a camera so that the camera can acquire images of a place corresponding to a trade name; and controlling the camera to acquire images of the place corresponding to the trade name on the basis of the preset information when a request for images corresponding to the trade name is inputted.

The image surveillance method may further include setting the camera on the basis of at least one of the trade name and a location when a request for images corresponding to the trade name and the location is inputted, and the controlling of the camera may include acquiring images of the place where the trade name exists by controlling the selected camera.

The image surveillance method may further include processing the images transmitted from the camera and recognizing the trade name in the images.

The setting of the preset information may include setting the preset information of the camera on the basis of information inputted from a manager, or on the basis of the trade name recognized by the image processing unit, and at least one of pan, tilt, and zoom information to be used for acquiring images of the trade name.

The camera may acquire the images while rotating on the basis of the preset information.

The setting of the preset information may include: setting the preset information for the camera so that the camera can acquire images of the place; and storing at least one of the trade name, the preset information, and a location of the camera.

The image surveillance method may further include storing the images acquired by the camera to correspond to at least one of an ID of the camera, a location of the camera, the trade name, and the preset information.

### [Advantageous Effects]

According to the present invention, the manager may be more quickly and easily check the images for the periphery of the place where the trade name exists by controlling the camera on the basis of the preset information matched with the trade name. Particularly, in the case in which an urgent check is required like an incident or a criminal accident, if the manager simply inputs only the information on the location and the trade name, the images for the very spot where the corresponding incident or accident took place may be searched and checked actively and quickly.

Furthermore, the present invention may be easily applied to known surveillance systems without requiring any changes on their structures, and if it is applied to the known surveillance systems in all parts of the country, surveillance efficiency of the country may be remarkably enhanced.

### [Description of Drawings]

FIG. 1 is a diagram of a image surveillance system in accordance with an exemplary embodiment of the present invention.
FIG. 2 is a block diagram of a image surveillance device shown in FIG. 1.
FIG. 3 is a flow chart showing a image surveillance method using the image surveillance device in accordance with the exemplary embodiment of the present invention.

### [Best Mode]

In describing exemplary embodiments of the present specification, when it is determined that a detailed description of the well-known art associated with the present invention may obscure the gist of the present invention, it will be omitted.

The accompanying drawings are provided only in order to allow exemplary embodiments disclosed in the present specification to be easily understood and are not to be interpreted as limiting the spirit disclosed in the present specification, and it is to be understood that the present invention includes all modifications, equivalents, and substitutions without departing from the scope and spirit of the present invention.

Singular forms are to include plural forms unless the context clearly indicates otherwise.

When an incident or a criminal accident is happened, a image surveillance device and a image surveillance method according to exemplary embodiments of the present invention control a camera using information on the location of the accident spot and a trade name (for example, a trade name or a telephone number existing in a signboard), thereby immediately providing images acquired at an optimal viewing angle to a manager.

The present invention will be described more fully hereinafter with reference to the accompanying drawings, in which exemplary embodiments of the invention are shown.

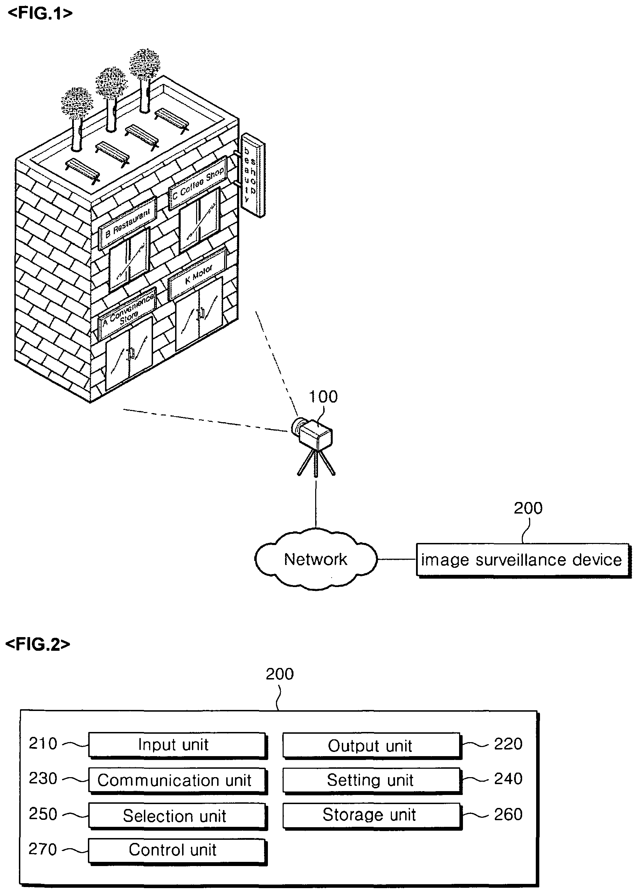

FIG. 1 is a diagram of a image surveillance system in accordance with an exemplary embodiment of the present invention.

In FIG. 1, the image surveillance system in accordance with the exemplary embodiment of the present invention includes a camera 100 and a image surveillance device 200.

In practice, the image surveillance system may be provided with at least one or more cameras 100, and each camera 100 acquires images of a peripheral environment and supplies acquired images to the image surveillance device 200. The cameras 100 may temporarily store the acquired images which will be transmitted to the image surveillance device 200.

Preferably, each camera 100 is a rotatable pan-tilt-zoom (PTZ) camera. In this case, the camera 100 acquires images of the peripheral environment, rotating on the basis of preset information set by the image surveillance device 200.

If the image surveillance device 200 requests images corresponding to preset information, the camera 100 acquires images of a place corresponding to the preset information, and supplies the acquired images to the image surveillance device 200. Here, the preset information includes at least one of pan, tilt, and zoom information related to the camera 100 so that a place where an appointed trade name exists can be accurately acquired by the camera 100.

The image surveillance device 200 sets the preset information of the camera 100 for the camera 100 to acquire images of the place where the appointed trade name exists, receives information about the appointed trade name and the location of the camera 100 from a manager, and controls the camera 100 to acquire images of a target place which has been set to correspond to the location of the camera 100 and the appointed trade name on the basis of the preset information.

The image surveillance device 200 may use the preset information of the camera 100 which has been inputted from the manager.

Here, the trade name refers to a trade name of a shop, and includes text (for example, Korean letters, English letters, numerals, etc.) existing in a plate-shaped signboard, a letter-protruding signboard, and a signboard attached to a window.

The image surveillance device 200 according to the exemplary embodiment of the present invention displays the location of each camera 100 on an electronic map on the basis of information on places where the cameras 100 are actually installed. In addition, the image surveillance device 200 may display the camera 100 and the corresponding trade name matched to the preset information of the camera 100 as a set.

Meanwhile, in the exemplary embodiment of the present invention, it is described that the image surveillance device 200 sets the preset information of each camera 100 on the basis of the information inputted from the manager. In addition, the image surveillance device 200 automatically recognizes the text existing in the trade name from the images by processing the received images from the camera 100, and may set and store the preset information with PTZ (pan, tilt, and zoom) values used in acquiring images of the place where the appointed trade name exists. In this case, of course, it is preferable that the image surveillance device 200 stores the preset information to be matched to the recognized text.

Hereinafter, the image surveillance device 200 according to the exemplary embodiment of the present invention is described in further detail with reference to FIG. 2.

FIG. 2 is a block diagram of a image surveillance device shown in FIG. 1 in further detail.

As shown in FIG. 2, the image surveillance device 200 according to the exemplary embodiment of the present invention includes an input unit 210, an output unit 220, a communication unit 230, a setting unit 240, a selection unit 250, a storage unit 260, and a control unit 270.

The input unit 210 like a keyboard, a mouse, or a virtual keyboard receives some information from the manager and transmits the received information to the control unit 270.

The output unit 220 includes a means capable of displaying image information like a monitor. The output unit 220 outputs image information and supplies it to the manager.

Meanwhile, the exemplary embodiment of the present invention separately constitutes the input unit 210 and the output unit 220, but they may be combined like a touch panel so that input and output operations can be simultaneously performed.

The communication unit 230 is connected to the camera 100 through a network to receive and transmit data from and to the camera 100. In this case, the communication unit 230 receives and transmits the data with a terminal (not shown) or an operating server (not shown), and may supply the images to the control unit 270 when a request for the images is inputted.

The setting unit 240 sets the preset information including at least one of pan, tilt, and zoom information related to the camera 100 so that the camera 100 can acquire images of a place corresponding to an appointed trade name. Furthermore, on the basis of the inputted information about the location and the trade name from the manager, the setting unit 240 sets the preset information of the corresponding camera 100, and stores the preset information, the location, and the trade name in the storage unit 260.

The selection unit 250 selects one camera 100, in which the corresponding trade name has been registered, among the multiple cameras 100 which are installed at the corresponding place on the basis of the inputted information about the location and the trade name from the manager, and informs the manager of the selected camera 100.

There may be several shops with the same trade name in other places. In this case, if location information of the camera 100 is provided together with the trade name, it is possible to receive the images for the corresponding place from the camera 100 satisfying all of the trade name and the location information except multiple cameras 100 that are matched to the trade name but installed in different places. Thus, efficiency and accuracy of image surveillance are enhanced.

The storage unit 260 matches the location of the camera 100, the trade name, and the preset information which has been set to correspond to the trade name, as a set of information, and then stores the matched set information. In this case, the storage unit 260 stores the images acquired by the camera 100 to correspond to at least one among an ID of the camera 100, the location information of the camera 100, the trade name, and the preset information.

The control unit 270 controls the input unit 210, the output unit 220, the communication unit 230, the setting unit 240, the selection unit 250, and the storage unit 260, and manages the flow of data between the various units 210 to 260 of the system.

Further, in response to a request for the images with respect to a place and a trade name from the input unit 210 or the communication unit 230, the control unit 270 supplies information related to the request to the selection unit 250, and controls the selected camera 100 to acquire images of a target place corresponding to the corresponding place and trade name.

In this case, the control unit 270 receives information on acquiring images of the spot corresponding to the trade name from the selected camera 100, and supplies the received information to the manager via the output unit 220.

According to the present invention, when the images with respect to the place and the trade name are requested, the images at the optimal view may be more quickly obtained by utilizing the previously stored preset information.

In particular, since maximum 200 pieces of preset information for each camera 100 may be stored to acquire images of a place where a trade name exists, the present invention may check the images for multiple trade names and may obtain various images for an area where one trade name exists.

Meanwhile, in the exemplary embodiment of the present invention, the setting unit 240 sets the preset information of the camera 100 to correspond to the information on the location and the trade name which is inputted from the manager. However, if an image processing unit (not shown) is additionally provided in the present invention, it matches the trade name, which has been automatically recognized from the image, with the location of the camera 100 and the preset information.

In detail, the image processing unit (not shown) detects an area of the appointed trade name from the images, recognizes the trade name consisting of the text in the detected area, and the setting unit 240 sets and stores the preset information, the location of the camera 100, and the recognized trade name as a set of information which will be used to acquire images of the target place where the appointed trade name exists.

In this case, the present invention may automatically recognize the trade name in the area of the trade name, and may acquire images of the target place matched with the appointed trade name.

Here, the area of the trade name refers to an outer wall of the building on which a plate-shaped signboard or a letter-protruding signboard is installed, or a peripheral area of such a wall, and if a plurality of the signboards are installed on a building, at least one or more trade names may be detected. There are various known methods to detect the text or the number(s) in the images, and any method may be selected and used in the present invention.

In addition, the image surveillance device 200 in accordance with the exemplary embodiment of the present invention may further include a map managing unit (not shown).

The map managing unit (not shown) stores an electronic map, and displays the camera 100 on the electronic map as an icon on the basis of information on the location of the camera 100. Further, the map managing unit (not shown) may display the trade name registered in the camera 100 as well as the icon of the camera 100. In other words, the map managing unit (not shown) may display the icon of the camera 100, and the trade name matched with the preset information of the camera 100.

According to the image surveillance device 200 of the present invention, the manager may be more quickly and easily check the images for the periphery of the place where the trade name exists by controlling the camera 100 on the basis of the preset information matched with the trade name. Particularly, in the case in which an urgent check is required like an incident or an criminal accident, if the manager simply inputs only the information on the location of the camera 100 and the trade name, the images for the very spot where the corresponding incident or accident took place may be searched and checked actively and quickly.

In addition, the image surveillance device 200 of the present invention displays the cameras 100 and trade names matched with the cameras 100 on the electronic map, thereby allowing the manager to easily and quickly check the images with respect to a periphery of a place where the appointed trade name exists.

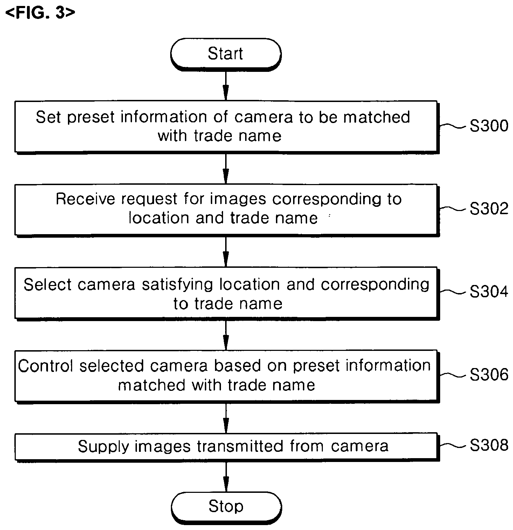

FIG. 3 is a flow chart showing a image surveillance method using the image surveillance device in accordance with the exemplary embodiment of the present invention.

As shown in FIG. 3, at step S300, the setting unit 240 of the image surveillance device 200 according to the exemplary embodiment of the present invention sets the preset information including pan, tilt, and zoom (PTZ) information of the camera 100 so that a place where a trade name inputted from the input unit 210 exists can be accurately acquired by the camera 100 matched with the trade name. Then, the setting unit 240 stores the information on the location of the camera 100 and the trade name, and the preset information in the storage unit 260.

For example, when a trade name consisting of English letters like "A Convenience Store" is inputted, PTZ coordinates that allow the images of the camera 100 to be located within a reference region are set to the camera 100.

The setting unit 240 may set a plurality of cameras 100 for one trade name. In this case, the image surveillance device 200 may be supplied with the images at various angles for one place from the multiple cameras 100.

Here, it is preferable that the setting unit 240 stores the trade name, the location of the camera 100, and the preset information as a set of information in the storage unit 260.

The location of the camera 100 includes a formal address of the place where the camera 100 is actually installed or the coordinates of the camera 100. The address to be stored may have a form of commonly used address, for example, building, ...-daero, ...-dong, ...-gu, Seoul. The information on the coordinates of the camera 100 (for example, GPS coordinates or block information of the corresponding area) may be additionally stored and used to manage the accurate location of the camera 100.

As such, the image surveillance device 200 enables a quick search in response to a request for the image by utilizing the information on the location of the camera 100 corresponding to the appointed trade name, and the preset information of the camera 100.

Next, at step S302 the selection unit 250 receives a request for the images with respect to the a place (for example, Simin-daero, Dongan-gu, Anyang-si) and a trade name from the manager, and at step S304 selects one camera 100 which is located at the corresponding place and in which the appointed trade name has been registered.

For example, if receiving a request for the images with respect to "Simin-daero, Dongan-gu, Anyang-si" and "A Convenience Store", the selection unit 250 selects the camera 100 located at "Simin-daero, Dongan-gu, Anyang-si" and including the trade name, "A Convenience Store".

Of course, if the images related to either the trade name or the location information is requested, the selection unit 250 may select all of the cameras 100 satisfying either the trade name or the location information. Such a selection may be efficient in the case in which the appointed location or trade name is somewhat unclear, or an area which is under surveillance of the image surveillance device 200 is too narrow.

Meanwhile, in the exemplary embodiment of the present invention, a very simple address (for example, ...-dong, Seoul) that an accident informer knows or information on peripheral facilities (for example, the station, a building, a landmark, etc.) may be used as address information instead of the formal address. For example, when receiving a request for the images with respect to "Induk Station" and "B Restaurant", the image surveillance device 200 searches the camera 100 which is located in the vicinity of "Induk Station" and corresponds to the trade name, "B Restaurant", and then operates the searched camera 100. In this case, the image surveillance device 200 may receive a request for the images from a terminal (not shown) or an operation system (not shown).

Further, in the case when the number of cameras 100 corresponding to the trade name and the location information inputted from the manager is in plural, the selection unit 250 may select at least one or more cameras 100 among them and transmit the request for the images to the selected ones.

Differently, the selection unit 250 may automatically select any one of them or the manager may directly select one.

After the selection unit 250 has selected the camera 100, at step S306, the control unit 270 controls the selected camera 100 so as to acquire images of the target place corresponding to the trade name on the basis of the preset information which has been stored to be matched with the trade name, so that the images are obtained.

In addition, the control unit 270 may transmit the request for the images with respect to the trade name to the selected camera 100. In this case, in response to the request, the camera 100 acquires images of the target place on the basis of the preset information which has been stored to correspond to the trade name, and transmits the acquired images to the image surveillance device 200. That is, in this case, the camera 100 has already stored the preset information corresponding to the trade name, and if a request for the images corresponding to the trade name is inputted, acquires images of the target place by using the preset information matched with the trade name.

Of course, as described at the step S306, the control unit 270 may directly controls the selected camera 100 on the basis of the preset information which has been stored to be matched with the trade name so that the images corresponding to the trade name may be obtained.

Meanwhile, the control unit 270 according to the exemplary embodiment of the present invention may display the icon for the location of each camera 100, and the trade names registered in the respective cameras 100 on the electronic map. In addition, the control unit 270 may display only the icon of the camera 100, which has been selected by the selection unit 250, and the trade name on the electronic map.

According to the present invention, when a request for the images related to an accident is inputted together with the information on at least one of the trade name and the location of the camera, the camera that has been installed at the corresponding place is controlled on the basis of the preset information matched with the corresponding trade name, acquiring images of a place where the accident took place. The acquired images are supplied to the manager.

In the image surveillance method of the present invention, since the spot the accident took place is automatically searched with no necessity for the manager to directly control pan/tilt angles of the cameras, the accident spot may be rapidly checked, and quick judgment and prompt action becomes possible.

Further, even if an accident informer doesn't know the detailed address for the accident spot, it is possible to immediately search and trace the accident spot only with simple information related to the corresponding area and information on facilities in the corresponding area.

Furthermore, the present invention prepares and stores control information for the cameras corresponding to the trade names in advance of the image surveillance. Accordingly, when the images with respect to a trade name or telephone number are requested, the images for the corresponding place may be quickly and actively obtained by using the previously stored control information.

Furthermore, the present invention may be easily applied to known surveillance systems without requiring any changes on their structures, and if it is applied to the known surveillance systems in all parts of the country, surveillance efficiency of the country may be remarkably enhanced.

The exemplary embodiments of the present invention are not implemented only by the aforementioned method and/or apparatus, but may be implemented by a program for realizing a function corresponding to a construction according to an exemplary embodiment of the present invention or a recording medium on which the program has been recorded. Such an implementation will be evident to those skilled in the art to which the present invention pertains from the embodiments.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A image surveillance device for acquiring images of a surveillance area, which comprising:
a setting unit that sets preset information including at least one of pan, tilt, and zoom information for a camera so that the camera can acquire images of a place corresponding to a trade name; and
a control unit that controls the camera to acquire images of the place corresponding to the trade name on the basis of the preset information when a request for images corresponding to the trade name is inputted.

2. The device of claim 1, further comprising a selection unit that selects the camera on the basis of at least one of the trade name and a location when a request for images corresponding to the trade name and the location is inputted,
wherein the control unit controls the selected camera to acquire images of the place corresponding to the trade name.

3. The device of claim 1, further comprising an image processing unit that processes the images transmitted from the camera, and recognizes the trade name in the images.

4. The device of claim 3, wherein the setting unit sets the preset information of the camera on the basis of information inputted from a manager, or on the basis of the trade name recognized by the image processing unit, and at least one of pan, tilt, and zoom information to be used for acquiring images of the trade name.

5. The device of claim 1, wherein the camera acquires the images while rotating on the basis of the preset information.

6. The device of claim 1, wherein the setting unit sets the preset information for the camera so that the camera can acquire images of the place, and stores at least one of the trade name, the preset information, and a location of the camera.

7. The device of claim 1, further comprising a storage unit, which stores the images acquired by the camera to correspond to at least one of an ID of the camera, a location of the camera, the trade name, and the preset information.

8. A image surveillance method for acquiring images of a surveillance area, which comprising:
setting preset information including at least one of pan, tilt, and zoom information for a camera so that the camera can acquire images of a place corresponding to a trade name; and
controlling the camera to acquire images of the place corresponding to the trade name exists on the basis of the preset information when a request for images corresponding to the trade name is inputted.

9. The method of claim 8, further comprising setting the camera on the basis of at least one of the trade name and a location when a request for images corresponding to the trade name and the location is inputted,
wherein the controlling of the camera includes acquiring images of the place corresponding to the trade name by controlling the selected camera.

10. The method of claim 8, further comprising processing the images transmitted from the camera and recognizing the trade name in the images.

11. The method of claim 10, wherein the setting of the preset information includes setting the preset information of the camera on the basis of information inputted from a manager, or on the basis of the trade name recognized by the image processing unit, and at least one of pan, tilt, and zoom information to be used for acquiring images of the trade name.

12. The method of claim 8, wherein the camera acquires the images while rotating on the basis of the preset information.

13. The method of claim 8, wherein the setting of the preset information includes: setting the preset information for the camera so that the camera can acquire images of the place; and storing at least one of the trade name, the preset information, and a location of the camera.

14. The method of claim 8, further comprising storing the images acquired by the camera to correspond to at least one of an ID of the camera, a location of the camera, the trade name, and the preset information.
